# EUROPÄISCHE PATENTSCHRIFT

(11) **EP 1 788 271 B1**
(45) Veröffentlichungstag und Bekanntmachung des Hinweises auf die Patenterteilung: **09.07.2008**
(21) Anmeldenummer: 06122105.7
(22) Anmeldetag: 11.10.2006
(51) Int. Cl.: F16D 23/06

(54) **Synchronisiereinrichtung**
Synchronizer
Synchroniseur

(30) Priorität: 17.11.2005 DE 102005054743
(43) Veröffentlichungstag der Anmeldung: 23.05.2007
(73) Patentinhaber: Schaeffler KG, 91074 Herzogenaurach (DE)
(72) Erfinder: Helm, Bernd, 91480, Markt Taschendorf (DE); Bössner, Ralf, 91217, Hersbruck (DE)

(56) Entgegenhaltungen:
- EP-A- 1 408 250
- DE-A1- 19 912 130
- DE-A1- 19 932 300
- JP-A- 2002 221 239

## Beschreibung

### Gebiet der Erfindung

Die Erfindung betrifft eine Vorrichtung zum Schalten zweier Gangräder mittels einer aus einer neutralen Stellung in Richtung der Gangräder verschiebbaren Schiebemuffe, welche Zähne zum Eingriff aufweist, wobei ein oder mehrere Zähne mit einer Riegelnut versehen sind, wobei die Vorrichtung mit wenigstens je einem Synchronring pro Gangrad für ein Synchronisieren von Drehzahlen des Gangrads mit der Schiebemuffe versehen ist, mit mindestens einem durch die Schiebemuffe in Richtung der Gangräder verschiebbaren Druckstück, das in Neutralstellung der Schiebemuffe in die Riegelnut eingreift und der Synchronring zum Ansynchronisieren zumindest begrenzt mittels des Druckstücks in Richtung des Gangrads verschiebbar in der Vorrichtung angeordnet ist.

### Hintergrund der Erfindung

Derartige Schiebemuffen sind in der Regel als Kupplungselemente in Synchronisiereinrichtungen von modernen handgeschalteten Kraftfahrzeuggetrieben eingesetzt. Sie verbinden eine Getriebewelle verdrehfest mit einem auf der Getriebewelle drehbar gelagerten Gangrad. Dabei sitzt die Schiebemuffe konzentrisch zur Getriebewelle angeordnet, drehfest und in Längsrichtung der Getriebewelle verschiebbar sowie mit einem Gangrad kuppelbar auf einem Synchronkörper.

Schiebemuffen gibt es in den verschiedensten Ausführungsformen. Zumeist weisen sie an ihrer Innenmantelfläche eine nach innen weisende Verzahnung auf, die in eine Gegenverzahnung des Synchronkörpers und im geschalteten Zustand in eine Verzahnung des Gangrades eingreift. Am Außenumfang der Schiebemuffe ist eine zumeist als Nut ausgebildete Führung für eine Schaltgabel vorgesehen. Mit der Schaltgabel wird die Schiebemuffe in Längsrichtung der Getriebewelle auf dem Synchronkörper verschoben, bis sie mit dem Zahnrad verbunden oder wieder zurück in ihre Neutralstellung bewegt ist.

In der Neutralstellung werden die Schiebemuffen oft axial durch ein Rastelement gehalten, das im Synchronkörper aufgenommen ist und zumeist federbelastet auf eine Ausnehmung wirkt. Die Ausnehmung ist, je nach Ausführung der Rastierung, an einzelnen oder allen nach innen gerichteten Zähnen der Schiebemuffe, den Riegelnutzähnen, ausgebildet. Das Rastelement bewirkt, dass die Schiebemuffe erst nach dem Überwinden eines definierten Widerstandes durch die Bedienperson, beim Schalten des Ganges, axial bewegt werden kann und sich nicht unbeabsichtigt und selbsttätig in axiale Richtung verschiebt. Um verschiedene Rastpunkte, z. B. für eine Neutral- und eine Raststellung, festzulegen oder Verschiebekräfte und Kraftverläufe unterschiedlicher Höhe zu definieren, sind häufig zwei oder mehr Ausnehmungen in Längsrichtung des Zahnes hintereinander angeordnet.

Neben oder unabhängig von den vorgenannten Rastelementen wirken bei anderen Synchronisiereinrichtungen auf die Ausnehmungen des nach innen gerichteten Zahnes Druckstücke oder Sperrelemente. Die Druckstücke dienen als Betätigungselement für den Prozess der Vorsynchronisierung. Bei axialem Verschieben der Schiebemuffe werden die Druckstücke axial durch diese mitgenommen. Dabei leiten sie den Prozess der Synchronisation ein, indem sie auf zwischen dem Gangrad und dem Synchronkörper angeordnete Synchronringe wirken.

Die Ausnehmung, in der sich das Druckstück in der Neutralstellung befindet, dient dazu, dem Bediener eine haptische Rückmeldung beim Durchschalten der Neutralstellung zu vermitteln. Sie ist insbesondere nicht dafür vorgesehen, das Druckstück fest zu führen. Von den Ausnehmungen abgesehen, weist die Zahnkontur eine glatte Oberfläche auf. Bei einem Gangwechsel wird die Schiebemuffe aus der Neutralstellung oder aus einer zweiten Endstellung in eine erste Endstellung verschoben, wobei die Schiebemuffe über das Druckstück in einem ersten Bewegungsschritt die Ansynchronisation, ein Angleichen der unterschiedlichen Drehzahlen zwischen dem Gangrad und dem Synchronkörper, einleitet.

Derartige, den Oberbegriff des Anspruchs 1 bildende Synchronisiereinrichtungen sind beispielsweise in EP 1 408 250 A1, DE 199 12 130 A1 oder DE 199 32 300 A1 offenbart. In der Neutralstellung ist die Feder des Druckstücks im Zustand minimaler Vorspannung, ohne dass auf das Druckstück in der Neutralstellung eine tangentiale Kraft ausgeübt wird. Derartige Vorrichtungen laufen nicht völllig geräuschlos, sondern erzeugen ein Getrieberasseln. Das Problem des Getrieberasselns ist im Wesentlichen auf das Aufeinanderprallen der Zahnflanken derjenigen Zähne, die sich nicht im Eingriff befinden und damit eine Kraft übertragen, zurückzuführen. Die Drehungleichförmigkeiten der Brennkraftmaschine werden auf das Getriebe übertragen und verursachen Beschleunigungsspitzen. Das Rasseln wird dabei zu einem Großteil von den Zahnflanken der Schiebemuffen und derSynchronkörper, welche sich in Neutralstellung befinden, verursacht. Das Getrieberasseln wird zunehmend vom Fahrer als störend empfunden, da der Gesamtgeräuschpegel in modernen Fahrzeugen zurückgeht.

Ein Ansatz zur Beseitigung dieses Problems wird beispielsweise in der Veröffentlichung "Gear Rattle Optimisation" (F2004F135) von Sbarbati et al., welche auf dem FISITA World Automotive Congress vorgestellt wurde, vorgeschlagen. Dazu werden sichelförmige Nuten eingebracht, in welche federnd gelagerte Rastelemente einrasten. Dabei ist die Nut nicht parallel zur Rotationsachse ausgerichtet, sondern abweichend hiervon mit einer anderen Winkellage orientiert. Dadurch wirkt während des Betriebs nicht nur eine radiale, sondern auch eine tangentiale Kraft auf das Synchronkörper-Schiebemuffen-System. Die tangentiale Kraftkomponente bewirkt, dass die Spiele zwischen den Zahnflanken der Schiebemuffe und der Synchronkörperverzahnung weitestgehend reduziert werden. Erzeugt wird die tangentiale Kraftkomponente durch eine sichelförmige Nut in der Verzahnung der Scheibemuffe. Diese ist jedoch aufwändig und damit nur kostenintensiv zu fertigen.

### Aufgabe der Erfindung

Der Erfindung liegt deshalb die Aufgabe zugrunde, eine Vorrichtung zu schaffen, bei der die vorstehend genannten Nachteile beseitigt sind.

### Zusammenfassung der Erfindung

Erfindungsgemäß wird diese Aufgabe nach den Merkmalen des kennzeichnenden Teils des Anspruchs 1 dadurch gelöst, dass die Zahnhöhe des mit dem Druckstück zusammen wirkenden Zahns sich in Umfangsrichtung ändert. Dabei ist mit Zahnhöhe nicht nur das Zahndach, sondern auch die Höhe der Riegelnut bezeichnet. Axial beabstandete Querschnitte durch den Riegelnutzahn sind damit voneinander verschieden. Durch derart profilierte Riegelnutzähne wird auf das Druckstück eine tangential wirkende Kraft ausgeübt, welche nicht unabhängig von der Verdrehung der Schiebemuffe gegenüber dem Synchronkörper ist, sondern von der Stärke der Verdrehung abhängt. Bei einer nicht geschalteten Schiebemuffen-Synchronkörper-Einheit, also einer, bei der sich das Druckstück in Neutralstellung befindet, ist es durch die Wahl eines geeigneten Profils möglich, das Rastelement ständig so vorzuspannen, dass stets die ersten Zahnflanken der Schiebemuffe mit den ersten Zahnflanken des Synchronkörpers zusammenwirken. Dazu ist das Profil im Querschnitt gesehen monoton steigend. Ein derartiger Riegelnutzahn erzeugt einerseits eine tangential wirkende Kraft, andererseits ist er einfach herzustellen, so dass es ermöglicht wird, die Schiebemuffe in einem spanlosen Kaltumformprozess wie durch Stanzen, Walzen und Biegen herzustellen. Kalt umgeformte, erfindungsgemäße Schiebemuffen sind besonders einfach und materialsparend herzustellen, was insbesondere für die Massenproduktion von erheblicher Bedeutung ist. Die Riegelnut des Riegelnutzahns muss sich nicht notwendigerweise über die gesamte Zahnbreite erstrecken, sie kann auch als lokale Vertiefung ausgebildet sein.

In einer vorteilhaften Weiterbildung ist die Steigung des Riegelnutzahnprofils auf dem gesamten Riegelnutzahn gleich groß. Unter Steigung wird dabei die Änderung des von der Rotationsachse ausgehenden Radiusvektors mit dem auf dem Riegelnutzahn überstrichenen Winkel verstanden. Das Riegelnutzahnprofil ist also über die gesamte, nach innen gerichtete Zahnfläche gleichmäßig ansteigend, insbesondere im Nutgrund, gegen den die Feder des Rastelements in der Neutralstellung vorgespannt ist. Eine derartig gleichmäßig ansteigende Zahnfläche ist fertigungstechnisch besonders einfach herzustellen. Dadurch dass die auf das Rastelement wirkende Kraft von der aktuellen Lage seines Berührungspunkts mit dem Riegelnutzahn unabhängig ist, ist es nicht von Bedeutung, auf welcher axialen Höhe sich das Rastelement auf dem Riegelnutgrund in der Neutralstellung befindet. Gegenüber Fertigungsungenauigkeiten bei der Schiebemuffenfertigung und Synchronkörperfertigung ist diese Ausbildung also tolerant.

In einer Ausbildung der Erfindung ist allein die Höhe des Nutgrunds in Umfangsrichtung nicht konstant, während das Zahndach des Riegelnutzahns den anderen Zahndächern entspricht. Besonders bei einer spanabhebenden Herstellung ist dadurch nur kein Zusatzaufwand erforderlich, da beim Herstellen der Nut diese gleich schräg zum Zahndach eingebracht werden kann.

In einer weiteren Fortbildung der Erfindung ist die Zahnfläche in Umfangsrichtung gekrümmt, wobei die Krümmung von der Radiuskrümmung der Schiebemuffe verschieden ist. Das Rastelement erfährt so eine desto größeren Widerstand, je weiter es sich von seiner im Mittel eingenommenen Position entfernt. Durch eine derartige Ausbildung der Riegelnutzahnfläche können insbesondere kleine Spiele zwischen den Zahnflanken aufgrund einer geringen Gegenkraft zugelassen werden. Sobald aber ein festgesetztes Maß an eingeleiteter Unwucht durch die Drehungleichförmigkeiten überschritten wird, nimmt die Gegenkraft stark zu, so dass das Spiel klein bleibt. Sobald die eingeleitete Unwucht abebbt, können aufgrund der Trägheit des Federsystems die Zahnflanken von Schiebemuffe und Synchronkörper nur mit geringer Geschwindigkeit aufeinander prallen, was den Rasseleffekt erheblich mindert.

Besonders vorteilhaft ist es, mit einer derartigen Kontur in axialer Richtung zu versehen, dass die erzeugte Tangentialkraft stets groß genug ist, um eine Bewegung der Zahnflanken zu verhindern, was allerdings hohe Kräfte auf das Rastelement einwirken lässt. Zu diesem Zweck ist vorgesehen, den Riegelnutzahn zu härten oder zu beschichten, damit über die Laufzeit keine Zahnprofiländerung erfolgt.

Weiterhin ist es vorgesehen, die Riegelnutzähne an ihrem axialen Ende mit einer Sperrstufe zu versehen. Erfolgt bei der erfindungsgemäßen Schiebemuffe ein Gangwechsel aus der Neutralstellung oder aus einer zweiten Endstellung in eine erste Endstellung, so kann das Rastelement sich auf dem Riegelnutzahn bewegen, aber nicht über die Sperrstufe hinaus. Damit kann es insbesondere nicht den nicht eingelegten Gang ansynchonisieren, indem es sich an einer Kante des Riegelnutzahns abstützt. Die Sperrstufe ermöglicht es auch, die Form der Riegelnut in axialer Richtung zu variieren. Sie kann beispielsweise ein zu den Stirnseiten hin abfallendes Profil aufweisen, ohne dass die Gefahr besteht, dass das Rastelement durch Spiel und Vibrationen über die Schiebemuffe hinaus wandert.

Schließlich ist es vorgesehen, das Rastelement so anzuordnen, dass es nicht genau in radialer Richtung wirkt, sondern dass das Rastelement auch eine tangentiale Kraft auf die Riegelnut erzeugt. Dazu ist es vorteilhaft, die das Rastelement aufnehmende Ausnehmung nicht genau radial anzuordnen, sondern sie schräg in den Synchronkörper einzubringen, um die Rastelemente des Standes der Technik verwenden zu können. In diesem Fall ist es entbehrlich, einen Riegelnutzahn zu verwenden, dessen Zahnhöhe sich ändert.

### Kurze Beschreibung der Zeichnungen

Die Erfindung wird nachfolgend anhand von einem Ausführungsbeispiel näher erläutert. Die dazugehörigen Zeichnungen zeigen dabei:
- Figur 1: einen Längsschnitt eines Teils einer Synchronisiervorrichtung,
- Figur 2: eine perspektivische Schrägansicht einer Schiebemuffenverzahnung mit einem Riegelnutzahn,
- Figur 3: einen Querschnitt eines Teilbereichs einer erfindungsgemäßen Synchronisiervorrichtung.

### Ausführliche Beschreibung der Zeichnungen

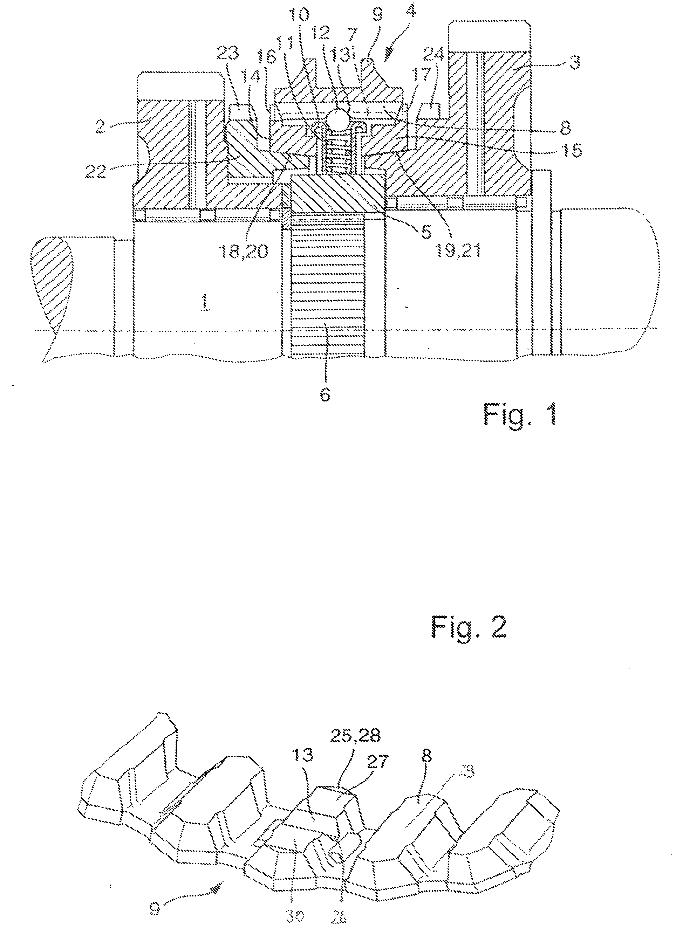

In Figur 1 ist mit 1 eine Welle eines Schaltgetriebes für Kraftfahrzeuge bezeichnet, auf welcher zwei Gangräder 2 und 3 frei drehbar gelagert sind. Zwischen diesen beiden Gangrädern 2 und 3 ist eine Synchronisiereinrichtung 4 angeordnet, über welche wahlweise eines der beiden Gangräder 2 oder 3 an die Welle 1 kuppelbar ist. Auf diese Weise wird das Schaltgetriebe in unterschiedliche Übersetzungsstufen geschaltet.

Die Synchronisiereinrichtung 4 weist einen Synchronkörper 5 auf, der drehfest in eine Verzahnung 6 der Welle 1 eingreift. Weiterhin ist der Synchronkörper 5 an seinem äußeren Umfang mit einer Außenverzahnung 7 versehen, in welche Zähne 8 einer Innenverzahnung einer Schiebemuffe 9 eingreifen. Im Synchronkörper 5 ist weiterhin ein Druckstück 10 mit einer Druckfeder 11 geführt, das ein kugelförmiges, in Längsrichtung über das Druckstück 10 vorstehendes Rastelement 12 aufnimmt. Das kugelförmige Rastelement 12 ragt dabei aus dem Synchronkörper 5 bis etwa zum Kopfkreis der Außenverzahnung 7 vor. In einer Neutralstellung der Synchronisiereinrichtung 4, in der keine der beiden möglichen Gangstufen geschaltet ist und sich somit die beiden Gangräder 2 und 3 frei gegenüber der Welle 1 drehen, greift das Rastelement 12 in eine in der Innenverzahnung 8 der Schiebemuffe 9 ausgebildete Riegelnut 13 eines Riegelnutzahns 27 (Figur 2) ein.

Beiderseits des Druckstücks 10 sind Synchronringe 14 und 15 angeordnet, die außen eine Sperrverzahnung 16 bzw. 17 und innen eine Reibfläche 18 bzw. 19 aufweisen. Die Reibflächen 18 und 19 der Synchronringe 14 und 15 wirken zusammen mit entsprechend ausgebildeten Reibflächen 20 und 21, welche am Gangrad 3 sowie an einem drehfest mit dem Gangrad 2 verbundenen Kupplungsring 22 ausgebildet sind.

Während eines Schaltvorgangs wird bei einer entsprechenden Sperrsynchronisierung über das Druckstück 10 zunächst während des Ansynchronisierens eine axiale Kraft auf den jeweiligen Synchronring 14 oder 15 ausgeübt, so dass dieser über seine Reibfläche 18 oder 19 von der entsprechenden Reibfläche 20 oder 21 mitgenommen und gegenüber dem Synchronkörper um einen bestimmten Winkel verdreht wird. In dieser Lage sperrt die Sperrverzahnung 16 eine weitere Verschiebung der Schiebemuffe 9. Diese Sperrwirkung wird erst dann aufgehoben, wenn Gleichlauf zwischen dem jeweiligen Gangrad 2 bzw. 3 und der Welle 1 erzielt ist. In diesem Moment wird die Innenverzahnung 8 der Schiebemuffe 9 durch die Sperrverzahnung 16 bzw. 17 hindurchbewegt und gelangt schließlich in Eingriff in einer Kuppelverzahnung 23 bzw. 24.

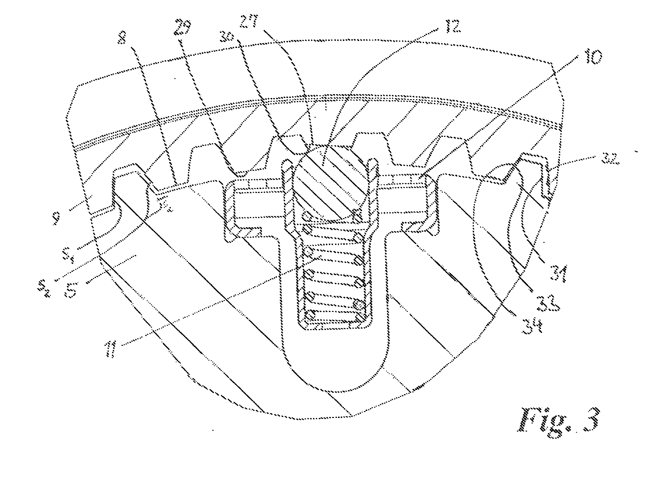

Die erfindungsgemäße Ausbildung der Schiebemuffe 9 kann der Figur 3 entnommen werden. Mit dem Riegelnutzahn 27 wirkt das kugelförmige, durch die Druckfeder 11 vorgespannte Rastelement 12 eines Druckstücks 10 zusammen. Die Zähne 8 weisen in Umfangsrichtung im Wesentlichen parallele Zahndächer 29 auf. Im Wesentlichen parallel bedeutet dabei, dass die Zahndächer je nach Herstellungsart auch leicht von der Umfangsrichtung abweichen. Beispielsweise wenn die Verzahnung 8 der Schiebemuffe 9 aus einem ebenen Blechstreifen hergestellt ist und erst danach ringförmig gebogen wird, sind die Zahndächer 29,30 im ebenen Zustand alle parallel ausgerichtet und weisen daher nach dem Rundbiegen aufgrund ihrer endlichen Breite nur im Wesentlichen in Umfangsrichtung. Erfindungsgemäß ist das Zahndach 30 der Riegelnut 27 abweichend von den übrigen Zahndächern ausgebildet, so dass der Riegelnutzahn 27 sich auch ohne eingebrachte Riegelnut 13 von den übrigen unterscheidet. Insbesondere aber der Nutgrund 26 (Figur 2) verläuft nicht parallel zur Umfangsrichtung, sondern mit einer definierten Abweichung, so dass nicht nur eine Radialkraft ausgeübt wird, sondern auch signifikante Tangentialkräfte entstehen. Durch diese Tangentialkräfte verändert sich die Lage der Schiebemuffe 9 gegenüber dem Synchronkörper 5, so dass die Spiele s₁ minimiert werden und gegebenenfalls sogar verschwinden. Die Komplementärspiele s₂ werden dadurch größer. Dabei bezeichnet s₁ das Spiel zwischen einer ersten Zahnflanke 31 des Synchronkörpers und einer ersten Zahnflanke 32 der Schiebemuffe und s₂ das Spiel zwischen einer zweiten Zahnflanke 33 des Synchronkörpers und einer zweiten Zahnflanke 34 der Schiebemuffe.

Treten Drehungleichförmigkeiten auf, welche die Schiebemuffe und den Synchronkörper zu verdrehen suchen, müssen diese zusätzlich gegen die Federkraft und Trägheit des Rastelements arbeiten. Die mittleren Spieländerungen von s₁ und s₂ fallen geringer aus, weswegen das Getrieberasseln vermindert wird.

In einer besonders einfachen Ausgestaltung sind die Riegelnut 13 und die Zahndächer 30 gegenüber der Umfangsrichtung schräg verlaufend. Die Zahnhöhe des Riegelnutzahns 27 ändert sich damit gleichmäßig in Umfangsrichtung. Ein derartiger Riegelnutzahn 27 lässt sich besonders einfach herstellen, und die auftretenden Tangentialkräfte sind unabhängig von der Position des Rastelements 12 auf dem Riegelnutzahn 27. Einer besonderen Fertigungsgenauigkeit bedarf es somit nicht.

In einer Weiterbildung der Erfindung weist der Riegelnutzahn 27 in Umfangsrichtung gesehen eine Krümmung auf, die sich von der Radiuskrümmung der Schiebemuffe unterscheidet, wobei das eine Ende der Riegelnut 13 eine geringere Bauhöhe aufweist als das andere Ende. Die Riegelnut 13 kann als eine Nut ausgebildet sein, welche gleichmäßig ihre Nuttiefe ändert. So ist es möglich, durch die entsprechende Form der Riegelnut 13 besonders kritische Schwingungsbereiche durch die dadurch erzeugte, geeignete Vorspannung zu vermeiden und damit Resonanzen zu unterdrücken, die das Rasseln verstärken können.

Während einer Schaltbewegung der Schiebemuffe 9 wird zunächst das Rastelement 12 von dieser mitgenommen und übt über das Druckstück 10 eine axiale Kraft auf den jeweiligen Synchronring 14 bzw. 15 aus. Nach dem Erreichen des Gleichlaufs rastet das Rastelement 12 aus der Riegelnut 13 aus und bewegt sich auf dem Riegelnutzahn 27. In einer weiteren Fortbildung der Erfindung wird die Bewegung des Rastelements 12 auf dem Riegelnutzahn 27 nach außen hin durch Sperrstufen 28 begrenzt. Dadurch kann das Rastelement 12 sich nicht über den Riegelnutzahn 27 hinaus bewegen und somit auch nicht hinter dem Riegelnutzahn 27 verschnappen. Die Sperrstufe 28 ist als ein nach radial innen vorstehender Vorsprung 25 ausgebildet. Besonders vorteilhaft ist es, wenn der Vorsprung 25 einen dem Radius des Rastelements 12 angepassten Negativradius besitzt, weil das Rastelement 12 dann in der Endposition gleichmäßig am Vorsprung 25 anliegt und Kraftspitzen vermieden werden.

Von Vorteil ist es weiterhin, wenn der Riegelnutzahn 27 und insbesondere die Riegelnut 13 gehärtet sind, da diese Bauteile nach der Erfindung zusätzliche Kräfte aufnehmen müssen und somit stärker beansprucht sind. Zum Einsatz können dabei alle üblichen Härteverfahren kommen. Alternativ dazu können Riegelnut und Riegelnutzahn mit einer Beschichtung versehen sein. Hier bieten sich metallfreie, amorphe Kohlenwasserstoffschichten an.

### Bezugszahlenliste

- 1: Welle
- 2: Gangrad
- 3: Gangrad
- 4: Synchronisiereinrichtung
- 5: Synchronkörper
- 6: Verzahnung
- 7: Außenverzahnung
- 8: Zähne der Schiebemuffe
- 9: Schiebemuffe
- 10: Druckstück
- 11: Druckfeder
- 12: Rastelement
- 13: Riegelnut
- 14: Synchronring
- 15: Synchronring
- 16: Sperrverzahnung
- 17: Sperrverzahnung
- 18: Reibfläche von 14
- 19: Reibfläche von 15
- 20: Reibfläche
- 21: Reibfläche
- 22: Kupplungsring
- 23: Kuppelverzahnung
- 24: Kuppelverzahnung
- 25: Vorsprung
- 26: Nutgrund
- 27: Riegelnutzahn
- 28: Sperrstufe
- 29: Zahndach von 8
- 30: Zahndach von 27
- 31: erste Zahnflanke des Synchronkörpers
- 32: erste Zahnflanke der Schiebemuffe
- 33: zweite Zahnflanke des Synchronkörpers
- 34: zweite Zahnflanke der Schiebemuffe

- s₁: Spiel
- s₂: Komplementärspiel

## Patentansprüche

1. Vorrichtung zum Schalten mindestens eines Gangrads (2, 3) mittels einer aus einer neutralen Stellung in Richtung des Gangrads (2, 3) verschiebbaren Schiebemuffe (9), welche Zähne (8) zum Eingriff aufweist, wobei ein oder mehrere Zähne (8) als Riegelnutzähne (27) mit einer Riegelnut (13) versehen sind, wobei die Vorrichtung mit wenigstens je einem Synchronring (14, 15) pro Gangrad (2,3) für ein Synchronisieren von Drehzahlen des Gangrads (2, 3) mit Drehzahlen der Schiebemuffe versehen ist, mit mindestens einem durch die Schiebemuffe (9) in Richtung des mindestens einen Gangrads (2, 3) verschiebbaren Druckstück (10), das in Neutralstellung der Schiebemuffe (9) in die Riegelnut (13) eingreift und der Synchronring (14, 15) zum Ansynchronisieren zumindest begrenzt mittels des Druckstücks (10) in Richtung des Gangrads (2, 3) verschiebbar in der Vorrichtung angeordnet ist, **dadurch gekennzeichnet, dass** die Zahnhöhe des mindestens einen Riegelnutzahns (27), welche nicht nur das Zahndach, sondern auch die Höhe der Riegelnut bezeichnet, in Umfangsrichtung nicht konstant ist, so dass auf das Druckstück (10) ständig eine tangential wirkende Kraft ausgeübt wird.

2. Vorrichtung nach Anspruch 1, **dadurch gekennzeichnet, dass** die Zahnhöhe der Riegelnutzähne (27) in Umfangsrichtung gesehen sich gleichmäßig ändert.

3. Vorrichtung nach Anspruch 1, **dadurch gekennzeichnet, dass** die Riegelnutzähne (27) in Umfangsrichtung gesehen eine Krümmung aufweisen, die sich von der Radiuskrümmung der Schiebemuffe (9) unterscheidet.

4. Vorrichtung nach Anspruch 1, **dadurch gekennzeichnet, dass** die Riegelnutzähne an ihren axialen Enden einen Vorsprung (28) aufweisen.

5. Vorrichtung nach Anspruch 4, **dadurch gekennzeichnet, dass** der Vorsprung (28) axialsymmetrisch ausgebildet ist und seine nach innen weisende Negativkontur einen Radius aufweist, der dem des Druckstücks (10) entspricht.

6. Vorrichtung nach Anspruch 1, **dadurch gekennzeichnet, dass** der Riegelnutzahn (27) die Riegelnut (13) mit einem Nutgrund (26) und ein Zahndach (30) aufweist, wobei allein die Höhe des Nutgrunds (26) des Riegelnutzahns (27) sich in Umfangsrichtung ändert, während die Höhe des Zahndachs im Wesentlichen konstant ist.

7. Vorrichtung nach Anspruch 1, **dadurch gekennzeichnet, dass** die Vorrichtung (1) durch Kaltumformen hergestellt ist.

8. Vorrichtung nach einem der vorhergehenden Ansprüche, **dadurch gekennzeichnet, dass** der Riegelnutzahn (27) gehärtet ist.

9. Vorrichtung nach einem der vorhergehenden Ansprüche, **dadurch gekennzeichnet, dass** der Riegelnutzahn (27) beschichtet ist.

10. Vorrichtung nach Anspruch 1, **dadurch gekennzeichnet, dass** im Zustand der Neutralstellung die Größe des Spiels s₁ zwischen einer Flanke (34) des Synchronkörpers (5) und einer Flanke (33) der Schiebemuffe (9) null beträgt.

## Claims

1. Device for selecting at least one gearwheel (2, 3) by means of a sliding sleeve (9) that can be displaced out of a neutral position in the direction of the gearwheel (2, 3), said sliding sleeve (9) comprising teeth (8) for engagement, one or more of the teeth (8) being configured as locking groove teeth (27) with a locking groove (13), said device being provided with at least one synchroniser ring (14, 15) per gearwheel (2, 3) for a synchronisation of speeds of rotation of the gearwheel (2, 3) with speeds of rotation of the sliding sleeve, and being further provided with at least one thrust member (10) that can be displaced by the sliding sleeve (9) in the direction of the at least one gearwheel (2, 3) and engages into the locking groove (13) in the neutral position of the sliding sleeve (9), and the synchroniser ring (14, 15), for initiating the synchronisation process, being arranged in the device for being displaced, at least to a limited extent, by the pressure member (10) in the direction of the gearwheel (2, 3) **characterised in that** the tooth height of the at least one locking groove tooth (27), which tooth height defines not only the tooth roof but also the height of the locking groove, is not constant in peripheral direction, so that a force acting in tangential direction is constantly exerted on the pressure member (10).

2. Device according to claim 1, **characterised in that**, as seen in peripheral direction, the tooth height of the locking groove teeth (27) varies uniformly.

3. Device according to claim 1, **characterised in that,** as seen in peripheral direction, the locking groove teeth (27) comprise a curvature that differs from the radius curvature of the sliding sleeve (9).

4. Device according to claim 1, **characterised in that,** at their axial ends, the locking groove teeth comprise a projection (28).

5. Device according to claim 4, **characterised in that** the projection (28) has an axially symmetric configuration and its inwards pointing negative contour has a radius that corresponds to that of the pressure member (10).

6. Device according to claim 1, **characterised in that** the locking groove tooth (27) comprises the locking groove (13) having a groove bottom (26) and a tooth roof (30), and only the depth of the groove bottom (26) of the locking groove tooth (27) varies in peripheral direction while the height of the tooth roof remains substantially constant.

7. Device according to claim 1, **characterised in that** the device (1) is made by cold forming.

8. Device according to one of the preceding claims, **characterised in that** the locking groove tooth (27) is hardened.

9. Device according to one of the preceding claims, **characterised in that** the locking groove tooth (27) is coated.

10. Device according to claim 1, **characterised in that**, in the state of the neutral position, the size of the clearance s₁ between a flank (34) of the synchroniser body (5) and a flank (33) of the sliding sleeve (9) is zero.

## Revendications

1. Dispositif pour la sélection d'au moins une roue dentée (2, 3) au moyen d'un manchon coulissant (9) qui peut être déplacé à partir d'une position neutre en direction de la roue dentée (2, 3), ledit manchon coulissant (9) comprenant des dents (8) pour l'engagement, l'une ou plusieurs desdits dents (8) étant configurées sous la forme de dents (27) à rainure de verrouillage munies d'une rainure (13) de verrouillage, ledit dispositif étant muni d'au moins un anneau de synchronisation (14, 15) par roue dentée (2, 3) pour une synchronisation de vitesses de rotation de la roue dentée (2, 3) à des vitesses de rotation du manchon coulissant, ledit dispositif étant muni, en plus, d'au moins un membre de la poussée (10) qui peut être déplacé en direction de l'au moins une roue dentée (2, 3) par le manchon coulissant (9), ledit membre de la poussée (10) s'engageant, dans la position neutre du manchon coulissant (9), dans la rainure (13) de verrouillage, et l'anneau de synchronisation (14, 15) étant agencé dans le dispositif en étant déplaçable, au moins de manière limitée, par le membre de la poussée (10) en direction de la roue dentée (2, 3) pour amorcer la synchronisation, **caractérisé en ce que** la hauteur de dent de l'au moins une dent (27) à rainure de verrouillage, laquelle hauteur de dent caractérise non seulement le toit de dent mais aussi la hauteur de la rainure de verrouillage, n'est pas constante en direction périphérique, de sorte qu'une force tangentielle agit constamment sur le membre de la poussée (10).

2. Dispositif selon la revendication 1, **caractérisé en ce que**, en regardant dans la direction périphérique, la hauteur de dent des dents (27) à rainure de verrouillage varie de manière uniforme.

3. Dispositif selon la revendication 1, **caractérisé en ce que**, en regardant dans la direction périphérique, les dents (27) à rainure de verrouillage possèdent une courbure qui est différente de la courbure de rayon du manchon coulissant (9).

4. Dispositif selon la revendication 1, **caractérisé en ce que**, à leurs extrémités axiales, les dents à rainure de verrouillage comprennent une saillie (28).

5. Dispositif selon la revendication 4, **caractérisé en ce que** la saillie (28) est configurée à symétrie axiale et son contour négatif qui est orienté vers l'intérieur possède un rayon qui correspond à celui du membre de la poussée (10).

6. Dispositif selon la revendication 1, **caractérisé en ce que** la dent (27) à rainure de verrouillage comprend la rainure (13) de verrouillage ayant un fond (26) de rainure et un toit 30) de dent, et que seulement la profondeur du fond (26) de rainure de la dent (27) à rainure de verrouillage varie en direction périphérique pendant que la hauteur du toit de dent reste sensiblement constante.

7. Dispositif selon la revendication 1, **caractérisé en ce que** le dispositif (1) est fabriqué par formage à froid.

8. Dispositif selon l'une des revendications précédentes, **caractérisée en ce que** la dent (27) à rainure de verrouillage est durcie.

9. Dispositif selon l'une des revendications précédentes, **caractérisé en ce que** la dent (27) à rainure de verrouillage est revêtue.

10. Dispositif selon la revendication 1, **caractérisé en ce que**, à l'état de la position neutre, la taille du jeu s₁ entre un flanc (34) du corps (5) de synchronisation et un flanc (33) du manchon coulissant (9) est de zéro.
